(19) Europäisches Patentamt
European Patent Office
Office européen des brevets

(11) EP 2 720 216 A2

(12) EUROPEAN PATENT APPLICATION

(43) Date of publication:
**16.04.2014 Bulletin 2014/16**

(51) Int Cl.:
***G09B 7/04*** *(2006.01)* ***A63H 33/00*** *(2006.01)*

(21) Application number: **13187585.8**

(22) Date of filing: **07.10.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **10.10.2012 FR 1202836**
**28.12.2012 US 201213730135**

(71) Applicant: **Zanzoon SAS**
**92200 Neuilly-sur-Seine (FR)**

(72) Inventor: **Collignon, Thierry**
**75007 Paris (FR)**

(74) Representative: **Osha Liang SARL**
**32, avenue de l'Opéra**
**75002 Paris (FR)**

(54) **Method for establishing virtual interactivity between an individual and an electronic guessing game device**

(57) An method for establishing virtual interactivity between an individual on one hand and an electronic guessing game device on the other, enabling the aforementioned electronic guessing game device to determine, through a minimum of questions, an element previously chosen by the individual, whether that element is an object, an animal, a person, a place, etc.

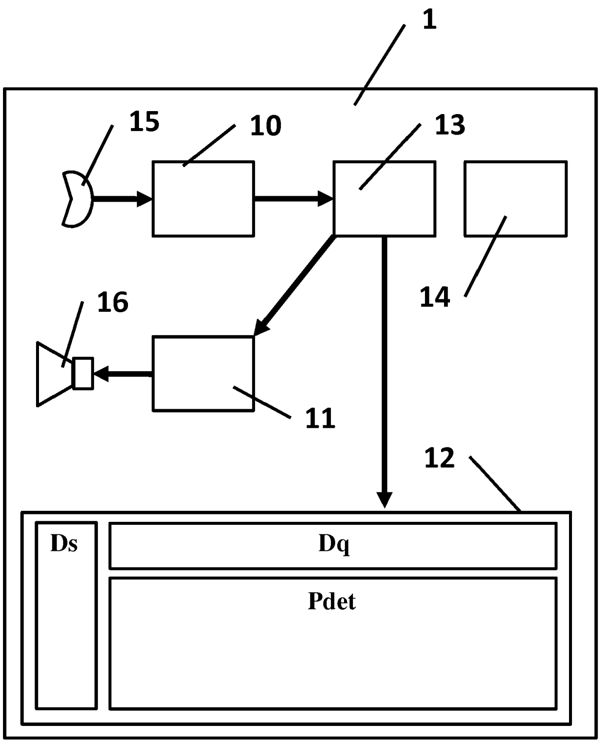


FIG. 1

Printed by Jouve, 75001 PARIS (FR)

EP 2 720 216 A2

## Description

TECHNICAL FIELD OF INVENTION

An object of the present disclosure is a method for establishing virtual interactivity between an individual on one hand and an electronic guessing game device on the other, enabling the aforementioned electronic guessing game device to determine, through a minimum of questions, an element previously chosen by the individual, whether that element is an object, an animal, a person, a place, etc.

BACKGROUND

In an interactive electronic guessing game, a user thinks of something, for example an animal, without telling anyone. The electronic device asks to the user, via a user interface, questions to which the user will for example have to respond "yes", "no", "it depends" or "I don't know". Based on these responses, the electronic device will ask more questions until it finds the element chosen by the user or until it comes to a dead end.

A state of the art study reveals that different interactive electronic games have already been developed. The game proposed by the Canadian company 20Q.net (published patent application US 2006/0230008) and the French company Elokence (akinator) can be cited as examples (http://fr.akinator.com).

The above cited games use existing user interfaces such as a keyboard, computer screen or mobile phone while problem solving algorithms and databases are usually outsourced on IT servers, thus requiring a computer and/or an internet connection to play. Another significant disadvantage with this type of game is that users need to know how to read and write, making them unsuitable for children under 6. Furthermore, these games use complex computer systems (neural networks and expert systems) which require significant powers of calculation.

SUMMARY

According to a first aspect, the present disclosure relates to a method for providing to a user a solution element from a predetermined list of solution elements in an electronic guessing game device, the device comprising a data acquisition system, a data restitution system, a processing unit with a volatile memory and a non-volatile memory, said non-volatile memory comprising a first table with solution elements, question elements, and for each pair of solution element and question element, a determining parameter indexing a level of concordance between said question element and said solution element, and the method comprising :

(a) generating a second table in the volatile memory of the processing unit by extracting from the first table solution elements, question elements and the determining parameters of each pair of solution element and question element,
(b) successively providing to the user a plurality of question elements from the second table using the data restitution system,
(c) acquiring from the user an information element in response to a question element provided to the user using the data acquisition system,
(d) identifying one or a plurality of improbable solution element(s) from the second table by comparing the information element and the determining parameter of each pair made of the question element and the remaining solution elements of the second table,
(e) modifying the second table by removing the improbable solution element(s), and
(f) providing to the user a remaining solution element from the second table using the data restitution system when no question element that enables to identify an improbable solution element from the second table remains in the second table.

The first table is developed and stored in the non-volatile memory of the device during the manufacturing of said device, i.e. preliminarily to the start of a guessing game, while the second table is generated during the course of the game in the volatile memory.

This unique process based on the generation in the volatile memory (for example the RAM memory) of the processing unit of a table of information elements (question elements and solution elements) which is modified during the course of the game by removing identified improbable solution elements using information elements acquired from the user in response to question elements, gives access on one hand to a completely independent and mobile system which does not require any network connection or specific external interface, and, on the other hand, to a system which is easy to use and inexpensive to manufacture. The implemented process requires also a low power of calculation making it possible to be implemented in a mobile device and offering the possibility to further implement additional modules such as a speech recognition module and a speech generation module. Using speech recognition and speech generation makes this interactive process especially adapted to young children under 6 years old as it does not require the ability to read or write; all exchanges between the device and the individual may be exclusively vocal.

According to an embodiment, the data acquisition system comprises a speech recognition module and acquiring an information element from the user comprises capturing one or a plurality of words pronounced by the user in response to the question element and interpreting the captured word(s) using the speech recognition module. For example, interpreting the captured word(s) comprises comparing the capture word(s) to sample recordings preliminary stored in said non-volatile memory.

According to an embodiment, the data restitution system comprises a speech generation module and providing a question element to the user comprises transcribing to the user acoustically and intelligibly said question element using vocal filed preliminary stored in said non-volatile memory.

According to an embodiment, the method further comprises estimating a most discriminating question element and providing to the user said most discriminating question element, wherein a most discriminating question element enables to identify a maximal number of improbable solution elements. The preliminary step of identifying the most discriminating question makes it possible for the electronic device to find the correct answer after the least number of questions. For example, estimating a most discriminating question element comprises calculating a discrimination coefficient for each question element not provided yet to the user, based on the determining parameters of said question element associated with each of the remaining solution elements.

According to an embodiment, the determining parameters are selected from a group comprising positive values and negative values, the discrimination coefficient is calculated based on the difference of the number of determining parameters having a positive values and the number of determining parameters having a negative values, the closest to zero the discrimination coefficient is, the most discriminating the question element is.

According to an embodiment, the determining parameters are selected from a group further comprising an indefinite value, a question element not provided yet to the user can be a most discriminating question element only if at least 90% of the determining parameters of said question element associated with each of any remaining solution elements are positive values or negative values.

According to an embodiment, 1/ the information element is selected from the group comprising an approving information value, a disapproving information value, a depending information value and an unknown information value, 2/ the determining parameters are selected from the group comprising a positive information having a low risk of error value, a positive information having an average risk of error value, an information having a high risk of error value, a negative information having an average risk of error value and a negative information having a low risk of error value, 3/ the solution element is identified as being improbable: i) when the determining parameter indexing the solution element to a question element provided to the user has a positive information having a low risk of error value or a negative information having a low risk of error value and if the information element acquired from the user in response to said question element has a depending information value, or ii) when the determining parameter indexing the solution element to a question element provided to the user has a negative information value and if the information element acquired from the user in response to said question element has an approving information value, or iii) when the determining parameter indexing the solution element to a question element provided to the user has a positive information value and if the information element acquired from the user in response to said question element has a disapproving information value.

According to an embodiment, a popularity index is attached to each solution element and the remaining solution element having a highest popularity index is provided to the user. This further index makes it possible for the electronic device to find the right answer even faster.

According to an embodiment, the method further comprises acquiring from the user a response element using the data acquisition system in response to the remaining solution element provided to the user, wherein the response element has one of an approving information value or a disapproving information value, and ending the guessing game if the response element has an approving information value or removing the remaining solution element from the second table and providing to the user another remaining solution element if the response element has a disapproving information value.

If no remaining solution element remains in the second table, the method may further comprises ending the game (the electronic device admits he failed in finding the right answer).

Alternatively, in a further embodiment, if no remaining solution element remains in the second table, the method may comprise an extension of the game, comprising creating a first additional table comprising the plurality of question elements not already provided to the user, at least one solution element identified as improbable and the determining parameters indexing the level of concordance between said solution element and said question elements, and iterating steps (b) to (f) using the first additional table.

The extension makes it possible for the electronic device to still find a solution element if the user has made an error when providing responses to questions provided by the electronic device. This way, the number of cases in which the game fails to find the right answer is reduced, while the required power of calculation is kept low as a new table created in the volatile memory of the processing unit takes into account the possible errors a user may have made. If no remaining solution remains in the first additional table, extension may be pursued generating a next additional table.

According to an embodiment, the method further comprises: acquiring from the user a response element using the data acquisition system in response to any remaining solution element provided to the user, wherein the response element has one of an approving information value or a disapproving information value, and ending the guessing game if the response element has an approving information value or removing said remaining solution element from the first additional table and providing to the user another remaining solution element if the response element has a disapproving information value.

According to an embodiment, the method further comprises: ending the guessing game if no remaining solution element remains in the first additional table.

According to an embodiment, 1/ the information element is selected from the group comprising an approving information value, a disapproving information value, a depending information value and an unknown information value, 2/ the determining parameters is selected from the group comprising a positive information having a low risk of error value, a positive information having an average risk of error value, an information having a high risk of error value, a negative information having an average risk of error value and a negative information having a low risk of error value, and 3/ the first additional table comprises one or a plurality of solution element(s), a determining parameter of which has a positive or negative information having an average risk of error value in response to a question element already provided to the user and the information element acquired from the user in response to said question element has a disapproving or an approving information value, respectively.

According to an embodiment, the method further comprises creating one or a plurality of subsequent additional tables.

According to an embodiment, 1/ the the information element is selected from the group comprising an approving information value, a disapproving information value, a depending information value and an unknown information value, 2/ the determining parameters is selected from the group comprising a positive information having a low risk of error value, a positive information having an average risk of error value, an information having a high risk of error value, a negative information having an average risk of error value and a negative information having a low risk of error value, and 3/ a subsequent additional table comprises one or a plurality of solution element(s), a unique determining parameter of which has a positive or negative information having a high risk of error value in response to a question element provided to the user and the information element acquired from the user in response to said question element has a disapproving or an approving information value, respectively.

According to a second aspect, the present disclosure relates to an electronic guessing game device for providing to a user a solution element from a predetermined list of solution elements, comprising:

- a data restitution system configured for providing to the user a plurality of question elements,
- a data acquisition system configured for acquiring from the user an information element in response to a provided question element,
- a non-volatile memory configured for storing a first table with solution elements, question elements, and for each pair of solution element and question element, a determining parameter indexing a level of concordance between said question element and said solution element, and
- a processing unit with a volatile memory configured for implementing the steps (a) - (f) of the method according to the first aspect.

According to an embodiment, the electronic guessing game device is a toy to be laid on a table.

According to an embodiment, the electronic guessing game device is part of another electronic device such as a smartphone or a tablet computer.

According to an embodiment, the data acquisition system comprises a microphone and a speech recognition system.

According to an embodiment, the data restitution system comprises a speaker and a text to speech generation module.

According to an embodiment, the non-volatile memory comprising the first table is an external memory, e.g. USB key adapted to be plugged to the electronic guessing game device.

According to an embodiment, the second table is stored in a volatile memory of the processing unit.

According to an embodiment, the device is wireless and further comprises an energy source.

According to a third aspect, the present disclosure relates to a computer readable storage medium, such as a flash memory, comprising computer readable program code embodied therein for causing a processing unit to perform the method according to the first aspect.

Other aspects and advantages of the present disclosure are illustrated by, but not limited to, the following description referring to figures described below.

BRIEF DESCRIPTION OF DRAWINGS

FIG. 1 shows a schematic view of an electronic device according to the present disclosure.
FIGs. 2A to 2C are diagrams illustrating different steps of the method according to the present disclosure, in one embodiment;
FIG. 3 is a diagram illustrating different steps of an extension of the method as illustrated in FIG. 2, in one embodiment.
FIG. 4 is a diagram illustrating different steps of a further extension of the method as illustrated in FIG. 2, in one embodiment.

DETAILED DESCRIPTION

In the embodiment as shown on FIG. 1, the electronic guessing game device comprises an energy source (stick battery) 14 which supplies the device with electricity, a processing unit 13, e.g. a microcontroller, comprising a memory containing programmes designed to manage different devices, such as a data restitution system 11 comprising a speech generation module and a data acquisition system 10 comprising a speech recognition module as well as a problem solving algorithm. The device also contains a non-volatile memory 12 (e.g. FLASH memory), for storing a first data table, the first table comprising a list (Dq) of questions which might be asked, a list (Ds) of possible answers (solution elements), and parameters (Pdet) indexing the level of compatibility between questions and answers.

The electronic guessing game device may be a toy to be laid on a table for example. It may be part of another electronic device such as a smartphone, a tablet computer and the like.

An integrated microphone (15) may be used to capture words pronounced by the user and an acoustic transducer (16), such as a loud speaker or piezoelectric type device, makes it possible to provide to the user information transmitted by the electronic device.

In some embodiments, the speech generation module comprises an electronic vocal restoration module that permits to transcribe to a user, both acoustically and intelligibly, vocal files which have been pre-recorded in the electronic unit with a human voice and concatenated to form a human voice.

The above described electronic guessing game device makes it possible to develop different variations including characters and people, geographical locations, historical events, food, etc. and also different languages to target different countries. In addition, the speech recognition module may enable the recognition of all voices and accents within the same language (thanks to hundreds of sample recordings, modelled by computer for comparison with the user’s voice).

Below is a description of how the system functions in relation to an embodiment of the present disclosure.

During the course of a guessing game, a user thinks of something (object, animal, character, etc.) which the game must "guess" by asking successive vocal questions. The possible responses are for example "yes", "no", "I don’t know" or "it depends", spoken out loud by the user and processed by the game. The game then deducts what object the user is thinking of (the solution element), and gives the answer.

SOLUTION ELEMENT: A thing (S) which the user may choose to think of (for example, if the theme is "animals": elephant, mouse, etc.). Each solution element (S) is assigned a unique code (Ds: E1, E2, ..., E150, etc.). After a question has been provided to the user and a response acquired, the solution element might remain (it is still a possible answer) or might be eliminated (it cannot be the answer). Two solution elements are said to be impossible to differentiate if none of the remaining (so far unasked) questions are able to discriminate them.

LIST OF POSSIBLE ANSWERS: List of remaining solution elements (Sr). At the start of the game (before any questions have been asked to the user), the list of possible answers may include all solution elements of the game.

PROPOSITION: When only one solution element from the list of possible answers remains, that answer is proposed. The user can therefore accept the proposition (correct answer) or reject it (incorrect answer). For example, the game may propose up to 5 propositions. In some embodiments, if the $5^{th}$ proposition is rejected, the game declares itself defeated and the game ends.

QUESTION ELEMENT: Each question element (Q) of the list of question Dq is assigned with a unique code: Q1, Q2, ..., Q100, etc. Preferably, a question element is provided only once during a game.

DETERMINING PARAMETERS (Pdet): For any given question element, each solution element has a determining parameter (Pdet) indexing the level of concordance between the question element and the solution element. The determining parameter corresponds to a "logical" response which may be indexed to illustrate the risk of error. For example, the determining parameters (Pdet) may be selected from the group comprising a positive information having a low risk of error value (Y), a positive information having an average risk of error value (Yn), an information having a high risk of error value (Na), a negative information having an average risk of error value (Ny) and a negative information having a low risk of error value (N). In other words,

Pdet = Y corresponds to an affirmative logical response with a low risk of error

Pdet = Yn corresponds to an affirmative logical response with a medium risk of error

Pdet = N corresponds to a negative logical response with a low risk of error

Pdet = Ny corresponds to a negative logical response with a medium risk of error

Pdet = Na corresponds to an affirmative or negative logical response with a high risk of error.

Y and N are called "radical statuses" (low risk of error) in the present description.

Yn and Ny are called "graded statuses" (medium risk of error) in the present description.

The determining parameter (Pdet) will be used to determine whether a solution element should be eliminated or retained. All the solution elements, question elements and determining parameters are defined and stored in a first table stored in the non-volatile memory 12 (FIG. 1) of the device (step 201, FIG. 2A).

Example of an extract from the first table:

Dq

| | *Popularity* | *Is your animal bigger than a football?* | *Does your animal have* |
|---|---|---|---|
| *Parakee* | | | |
| *Elephan* | | | |
| *Hare* | | **Pdet** | |

Ds

POPULARITY: Each solution element may be assigned with a popularity index (P), for example from 0 to 100 (the higher the index, the more popular the element). The popularity index may be used for proposing the most popular element in the event that several elements are impossible to differentiate.

INFORMATION ELEMENTS (I): the information element is the element interpreted from the response pronounced by the user in response to a question. For example, the information element (I) may be selected from the group comprising an approving information value (Yi), disapproving information value (Ni), depending information value (Di) and unknown information value (Ui). The information element may be given an approving information value (Yi) if the user replies "yes" and may be given a disapproving information value (Ni) if the user replies "no". The information element may be given a depending information value (Di) if the user replies a response selected from the group comprising "maybe", "it depends", "sometimes" and related synonyms. The information element (I) may be given an unknown information value (Ui) if the user replies a response selected from the group comprising "I do not know", "irrelevant", "unknown", related synonyms or if the user replies a response unrecognizable by the data acquisition system (10).

ERRORS: When the user's response does not match the logical response of the element he is thinking of, the user is said to have made an error. For example, the user is to have made a major error in the following two cases:

- The user responds "YES" and the logical response of the element the user is thinking of is N (radical status).
- The user responds "NO" and the logical response of the element the user is thinking of is Y (radical status).

In the same manner, the user may be said to have made a minor error in the following three cases:

- The user responds "YES" and the logical response of the element the user is thinking of is Ny (graded status).
- The user responds "NO" and the logical response of the element the user is thinking of is Yn (graded status).
- The user responds "IT DEPENDS" and the logical response of the element the user is thinking of is Y or N (radical status).

Example: The user is thinking of a parakeet.

| | *Popularity* | *Is your animal bigger than a football?* | *Does your animal have fur?* |
|---|---|---|---|
| *Parakeet* | *24* | *Ny* | *N* |

Question: "Is your animal bigger than a football?"; Response: "Yes" → the user has made a minor error.

Question: "Does your animal have fur?"; Response: "Yes" → the user has made a major error.

RESPONSE ELEMENT (R): the response element is the element interpreted from the response pronounced by the user in response to a proposition (step 212, FIG. 2C). For example, the response element (R) may be selected from the group comprising an approving information value (Yi) or disapproving information value (Ni).

Different steps of the game are now described in reference to FIGs. 2 to 4.

GENERATION OF A SECOND TABLE : at the start of a guessing game, a second table is automatically generated by the processing unit (step 201, FIG. 2A). The second table comprises solution elements (S) and questions elements (Q) extracted from the first table and the corresponding determining parameters (Pdet). For example, the second table may comprise the same list of question elements and response elements than the first table.

PROVIDING A QUESTION ELEMENT TO THE USER: After asking the user to choose an object (without saying what it is), the game starts to ask questions (step 202) and the user gives a response after each question (step 203). In order to find the correct answer (S) after the least number of questions, the game identifies discriminating questions elements (Qd) to be provided to the user. Preferably, the most discriminating question element from the list of unasked questions may be estimated and provided to the user - *i.e.,* the question which eliminates the maximum number of solution elements, regardless of the response given by the user.

CONDITIONS FOR A DISCRIMINATING QUESTION (Qd): For example, three conditions may be met before a question is asked:

1) $nb\ Y + nb\ Yn \neq 0$, wherein nb Y is the number of remaining solution elements, the determining parameters (Pdet) of which have a positive information having a low risk of error value Y and wherein nb Yn is the number of remaining solution elements, the determining parameters (Pdet) of which have a positive information having an average risk of error value Yn: in response to the given question, Y or Yn logical responses must appear for at least one remaining element.

2) $nb\ N + nb\ Ny \neq 0$, wherein nb N is the number of remaining solution elements, the determining parameters (Pdet) of which have a negative information having a low risk of error value N and wherein nb Ny is the number of remaining solution elements, the determining parameters (Pdet) of which have a negative information having an average risk of error value Ny: in response to the given question, N or Ny logical responses must appear for at least one remaining element.

3) $nb\ Na / nb\ Sr < 0{,}1$, wherein nb Na is the number of remaining solution elements, the determining parameters (Pdet) of which have an information having a high risk of error value Na and wherein nb Sr is the number of remaining solution elements Sr: in response to the given question, the overall proportion of Na logical responses (high risk of error) must be lower than 50%, for example, lower than 20% and preferably less than 10%.

Conditions 1) and 2) ensure the usefulness of the question with respect of discrimination (for example, a question for which all the remaining elements have a response logical responses of Y, Yn or Na cannot be considered discriminating). The 3rd condition enables avoiding questions of which the risk of error is very high for a too high number of remaining solution elements.

DISCRIMINATION COEFFICIENT: The algorithm may calculate a discrimination coefficient (VAL(Qx)) for each question, enabling to evaluate how discriminating each question is and choose the question with the weakest coefficient.

$$VAL(Qx) = (nb\ Y + nb\ Yn) - (nb\ N + nb\ Ny)$$

VAL(Qx) = (number of remaining solution elements which have Y or Yn logical response to the question Qx) minus (number of remaining solution elements which have N or Ny logical response to the question Qx)

The weaker the VAL(Qx), the more discriminating the question.

RULE FOR CHOOSING THE QUESTION: The game may choose the question with the weakest coefficient from a list of questions which meet the necessary conditions, except for example the first 3 questions. If several questions have the same coefficient, the game may chooses one of them at random.

SPECIFIC CASE OF CHOOSING THE FIRST THREE QUESTIONS: In some embodiments, the first 3 questions are chosen randomly from the 10 questions having the weakest VAL(Qx) which meet the three aforementioned conditions, to bring variety to the game (so that the game does not always begin with the same questions). If several questions have the same coefficient, the game may chooses one of them at random.

PROGRESSIVE ELIMINATION OF THE SOLUTION ELEMENTS: After each response, the game identifies the improbable elements (Si) for which the logical response (determining parameter) is not in accordance with the information element (I) provided by the user (step 204), and eliminates such improbable elements from the second table (step 205).

The diagram illustrated on FIG. 2B shows an example of identification of improbable solution elements (Si).

- Case 1: The user responds "YES" (approving information value Yi): the game identifies as improbable and eliminates the solution elements having a N or Ny logical response to the question asked (= elements for which the logical response is "no", with a low or medium risk of error) (step 209, FIG. 2B).
- Case 2: The user responds "NO" (disapproving information value Ni): the game identifies as improbable and eliminates the solution elements having a Y or Yn logical response to the question asked (= elements for which the logical response is "yes", with a low or medium risk of error) (step 210, FIG. 2B).
- Case 3: The user responds "I DON'T KNOW" (unknown information value Ui): the game does not eliminate any solution elements.
- Case 4: The user responds "IT DEPENDS" (depending information value Di): the game identifies as improbable and eliminates all solution elements having a Y or N logical response to the question asked (= elements for which there is no uncertainty) (step 208, FIG. 2B).

Example:

| | *Popularity* | *Is your animal bigger than a football?* | *Does your animal have fur?* |
|---|---|---|---|
| *Parakeet* | *24* | *Ny* | *N* |
| *Elephant* | *90* | *Y* | *Na* |
| *Hare* | *36* | *Yn* | *Y* |

If the game asks the question "Is your animal bigger than a football?" and the user responds "YES", the game will eliminate the parakeet. The elephant and the hare will remain as possible answers (Sr). If the game then asks the question "Does your animal have fur?" and the user responds "NO", the game will eliminate the hare. The elephant will be the only solution element (Sr) remaining in the list of possible answers; elephant will therefore be suggested as the answer.

PROPOSING AN ANSWER: When no discriminating question element (Qd) remains (step 206, FIG. 2A), the game suggests an answer (step 207, FIG. 2A) which is a remaining solution element (Sr).

FIG. 2C shows a diagram illustrating the steps for proposing a remaining solution element (Sr). A remaining solution element is proposed in two cases.

- Case 1: Only one solution element (Sr) remains on the list of possible answers. The game announces that it has found the answer and makes a proposition. If the user accepts the answer, the game declares itself the winner; play is over. If the user rejects the proposition, the game may be extended (see below).
- Case 2: There are several solution elements (Sr) remaining on the list of possible answers and there are no discriminating questions (Qd) which have not already been asked. This is the case for solution elements which are impossible to differentiate. The game therefore proposes the solution element (Sr) with the highest popularity index (P) as an answer (step 211, FIG. 2C). If the user accepts the proposition (step 213, FIG. 2C), the game declares itself the winner; play is over. If the user rejects the proposition, the game suggests the 2nd most popular solution element, then the next (step 214, FIG. 2C). When the user rejects the last proposition suggested, the game may perform an extension.

Example: Whiting and Wolffish are two solution elements (Sr) which are impossible to differentiate as no question (Qd) are enabled to separate them.

| | *Popularity* | *Is it larger than a microw ave?* | *Does it live in the sea?* | *Does it have spots?* | *Is it usually grey?* |
|---|---|---|---|---|---|
| *Whiting* | *6* | *Ny* | *Yn* | *N* | *Yn* |

(continued)

| | Popularity | Is it larger than a microw ave? | Does it live in the sea? | Does it have spots? | Is it usually grey? |
|---|---|---|---|---|---|
| Wolffish | 4 | Na | Y | N | Yn |

The most popular element is Whiting (index 6) therefore the game suggests Whiting as the answer (Sr). If the user rejects Whiting, the game suggests Wolffish. If the user rejects Wolffish, the game may be extended.

EXTENSION: In some embodiments, when the game suggests an answer (Sr) which is rejected (and no solution element (Sr) remains on the list of possible answers), the game is extended. The reason for extending the game may be to reincorporate solution elements (S) which have been eliminated due to a minor error. These are solution elements which have a "graded" logical response (Yn or Ny) to the question which led to their elimination. In some embodiments, the game will then remove from the list of possible answers any solution elements which would inevitably have been eliminated by a later question to which their logical response is radical (Y or N).

The extension basically consists of automatically generating an additional table and starts the game again as previously described but using such additional table.

FIG. 3 shows a diagram illustrating the generation of an additional table in an example. In a first step 301, an improbable solution elements (Si) removed from the previous table is selected. If an information element (I) has a disapproving information value (Ni) while the corresponding determining parameter (Pdet) is a positive information having an average risk of error value (Yn) (step 302) and/or if an information element (I) has an approving information value (Yi) while the corresponding determining parameter (Pdet) is a negative information having an average risk of error value (Ny) (step 303), the solution element (S) is added to an additional table (step 304).

In the example below, the errors are underlined in bold type. The elements to be reincorporated in the list of possible questions are E3, E4 and E5.

| *Questions asked* | *Q5* | *Q20* | *Q32* | *Q12* | *Q75* | *Q28* | *Q42* | *Q43* | *Q7* |
|---|---|---|---|---|---|---|---|---|---|
| ***Response given*** | ***NO*** | ***NO*** | ***YES*** | ***NO*** | ***YES*** | ***IT DEPENDS*** | ***NO*** | ***I DON'T KNOW*** | ***YES*** |
| *E1* | *N* | ***Y*** | *Yn* | *Na* | *Yn* | *N* | *N* | *Ny* | *Yn* |
| *E2* | *N* | *Ny* | ***Ny*** | *N* | *Yn* | *Yn* | ***Y*** | *N* | *Y* |
| ***E3*** | *Ny* | *N* | *Yn* | *Na* | *Y* | *Yn* | *N* | *N* | ***Ny*** |
| ***E4*** | *Ny* | ***Yn*** | *Y* | ***Yn*** | ***Ny*** | *Na* | *Na* | *Ny* | *Yn* |
| ***E5*** | *N* | *N* | *Na* | *Na* | *Y* | ***Y*** | ***Yn*** | *Na* | *Y* |

- Element E1 was eliminated at question Q20, following a major error. It will not be reincorporated into the list of possible answers.
- Element E2 was eliminated at question Q32, following a minor error. However, it will not be reincorporated into the list of possible answers because it would have been eliminated shortly after by question Q42, where it has a radical status (logical response (Pdet) Y/ response "NO").

- Element E3 was eliminated at question Q7 (last question), following a minor error. It will be reincorporated into the list of possible answers.
- Element E4 was eliminated at question Q20 (second question), following a minor error. In the questions which follow, we notice two other logical responses which are not consistent with the response given. However these are graded statuses (Q12 and Q75). E4 will therefore be reincorporated into the list of possible answers.
- Element E5 was eliminated at question Q28, following a minor error. The logical response to Q42 is not consistent with the response given either, but it is a graded logical response. E5 will therefore be reincorporated into the list of possible questions.

In some embodiments, the extension process basically involves reincorporating all the elements into the game and silently asking each question again in the same order, this time eliminating only those elements with radical status:

- Case 1: the response was "YES": the game eliminates the elements with N as logical response.
- Case 2: the response was "NO": the game eliminates the elements with Y as the logical response.
- Case 3: the response was "I DON'T KNOW": the game doesn't eliminate any element.

- Case 4: the response was "IT DEPENDS": the game does not eliminate any element.

Several solution elements will therefore be brought back into the game by this extension. They are reincorporated into the list of possible answers. The game starts again on the basis of this new list of possible answers and asks questions (the same concept as at the start of the game) to progressively eliminate different solution elements, until it can suggest a new answer. In some embodiments, if this new proposition is rejected, the game will be extended a second time; this extension will focus on the previous set of questions (*i.e.* the previous table).

SUPER EXTENSION: In some embodiments, if a proposition is rejected by the user and the game has already been extended, for example, twice or if, following the first extension, no elements have been put back in play, the game may perform a super extension. The super extension aims to reincorporate elements into the list of possible answers which have been eliminated because of a major error. In some embodiments, it also enables to reincorporate elements which have been eliminated because of a minor error during questions from the previous set of questions (i.e. the previous table). For example, for all questions asked from the start of the game, the response given and the logical response of all elements are evaluated, except those which have already been rejected by the user. In some embodiments, elements of which only one response was due to a major error are incorporated in the list of possible answers. In some embodiments, elements of which only one response was due to a major error and/or a minor error are incorporated in the list of possible answers. In other embodiments, elements of which up to two or more (e.g. 3, 4) responses were due to an error (major and/or minor) are incorporated in the list of possible answers.

FIG. 4 shows a diagram illustrating the generation of an additional table in an example. In a first step 401, an improbable solution elements (Si) removed from all previous tables is selected. In this exemplary embodiment, if a unique information element (I) has a disapproving information value (Ni) while the corresponding determining parameter (Pdet) is a positive information having a low or high risk of error value (Y, Yn) (step 402) or if a unique information element (I) has an approving information value (Yi) while the corresponding determining parameter (Pdet) is a negative information having a low or high risk of error value (N, Ny) (step 403), the solution element (S) is added to an additional table (step 404).

In the example below, the errors are underlined in bold type. The elements to be reincorporated are E1, E2, E3, E6.

| *Questions asked* | *Q3* | *Q16* | *Q20* | *Q78* | *Q1* | *Q25* | *Q60* | *Q32* | *Q6* |
|---|---|---|---|---|---|---|---|---|---|
| ***Answers given*** | ***YES*** | ***YES*** | ***NO*** | ***YES*** | ***I DON'T KNOW*** | ***NO*** | ***NO*** | ***IT DEPENDS*** | ***YES*** |
| ***E1*** | *Y* | *Yn* | *Ny* | *Yn* | *Y* | *Ny* | *N* | *Ny* | ***Ny*** |
| ***E2*** | *Na* | *Y* | *N* | ***N*** | *Yn* | *Ny* | *Ny* | *N* | *Y* |
| ***E3*** | *Yn* | *Yn* | *Na* | *Yn* | *N* | *N* | ***Yn*** | *Y* | *Y* |
| *E4* | ***N*** | *Y* | *N* | *Y* | *N* | ***Y*** | *N* | *N* | *Y* |
| *E5* | ***Ny*** | ***Ny*** | *Ny* | ***N*** | *Na* | *Na* | *Ny* | *Ny* | *Yn* |
| ***E6*** | *Yn* | *Yn* | *Ny* | *Na* | *Y* | ***Y*** | *Na* | *Na* | *Na* |

The game starts again on the basis of this new list of possible answers and asks questions (on the principle of initial elimination) until it comes up with a new answer (Sr). In some embodiments, if this proposition is rejected, the game will be extended on the basis of questions from the super extension, etc.

Although described using a certain number of detailed example embodiments, the method and device according to the invention comprise different variants, modifications and developments which will be obvious to the person skilled in the art, it being understood that these different variants, modifications and developments fall within the scope of the invention, as defined by the claims below.

## Claims

**1.** A method for providing to a user a solution element from a predetermined list of solution elements comprising:

storing, in a non-volatile memory, a first table with solution elements, question elements, and for each pair of solution element and question element, a determining parameter indexing a level of concordance between said question element and said solution element;

generating, by a processing unit, a second table by extracting from the first table solution elements, question elements and the determining parameters of each pair of solution element and question element;

successively providing to the user a plurality of question elements from the second table;
acquiring, from the user, an information element in response to a question element provided to the user;
identifying one or a plurality of improbable solution element(s) from the second table by comparing the information element and the determining parameter of each pair made of the question element and any remaining solution elements of the second table;
modifying the second table by removing the improbable solution element(s); and
providing, to the user, any remaining solution elements from the second table when no question element that enables to identify an improbable solution element from the second table remains in the second table.

**2.** The method according to claim 1, wherein acquiring the information element from the user comprises capturing one or a plurality of words pronounced by the user in response to the question element and interpreting the captured word(s) using the speech recognition module.

**3.** The method according to claim 2, wherein interpreting the captured word(s) comprises comparing the capture word(s) to sample recordings preliminary stored in the non-volatile memory.

**4.** The method according to any of the preceding claims, wherein providing a question element to the user comprises transcribing to the user acoustically and intelligibly said question element using vocal filed preliminary stored in the non-volatile memory.

**5.** The method according to any of the preceding claims, further comprising:

estimating a most discriminating question element and providing to the user the most discriminating question element, wherein the most discriminating question element enables to identify a maximal number of improbable solution elements.

**6.** The method according to claim 5, wherein estimating the most discriminating question element comprises calculating a discrimination coefficient for each question element not provided yet to the user, based on the determining parameters of the question element associated with each of any remaining solution elements.

**7.** The method according to claim 6, wherein the determining parameters are selected from a group comprising positive values and negative values, the discrimination coefficient is calculated based on the difference of the number of determining parameters having a positive values and the number of determining parameters having a negative values, the closest to zero the discrimination coefficient is, the most discriminating the question element is.

**8.** The method according to claim 7, wherein the determining parameters are selected from a group further comprising an indefinite value, a question element not provided yet to the user can be a most discriminating question element only if at least 90% of the determining parameters of said question element associated with each of any remaining solution elements are positive values or negative values.

**9.** The method according to any of the preceding claims, wherein:

the information element is selected from the group comprising an approving information value, a disapproving information value, a depending information value and an unknown information value,
the determining parameters are selected from the group comprising a positive information having a low risk of error value, a positive information having an average risk of error value, an information having a high risk of error value, a negative information having an average risk of error value and a negative information having a low risk of error value, and
the solution element is identified as being improbable:

when the determining parameter indexing the solution element to a question element provided to the user has a positive information having a low risk of error value or a negative information having a low risk of error value and if the information element acquired from the user in response to said question element has a depending information value, or
when the determining parameter indexing the solution element to a question element provided to the user has a negative information value and if the information element acquired from the user in response to said question element has an approving information value, or
when the determining parameter indexing the solution element to a question element provided to the user has a positive information value and if the information element acquired from the user in response to said question element has a disapproving information value.

**10.** The method according to any of the preceding claims, wherein each solution element has a popularity index attached to it and wherein the user is provided each remaining solution element having a highest popularity index.

**11.** The method according to any of the preceding claims, further comprising:

acquiring from the user a response element using the data acquisition system in response to any remaining solution element provided to the user, wherein the response element has one of an approving information value or a disapproving information value, and
ending the guessing game if the response element has an approving information value or removing said remaining solution element from the second table and providing to the user another remaining solution element if the response element has a disapproving information value.

**12.** The method according to claim 11, wherein if no remaining solution element remains in the second table, the method further comprises:

creating a first additional table comprising the plurality of question elements not already provided to the user, at least one solution element identified as improbable and the determining parameters indexing the level of concordance between said solution element and said question elements.

**13.** An electronic guessing game device for providing to a user a solution element from a predetermined list of solution elements, comprising:

a data restitution system configured for providing to the user a plurality of question elements;
a data acquisition system configured for acquiring from the user an information element in response to a provided question element;
a non-volatile memory configured for storing a first table with solution elements, question elements, and for each pair of solution element and question element, a determining parameter indexing a level of concordance between said question element and said solution element; and
a processing unit configured for:

generating a second table in a volatile memory comprising solution elements and question elements extracted from the first table and the determining parameters of each pair of solution element and question element, and
modifying the second table by removing improbable solution elements from the second table, an improbable solution element being identified by comparing an information element acquired from the user in response of a question element and the determining parameter of each pair made of the question element and the remaining solution elements of the second table.

**14.** The electronic guessing game device according to claim 13, wherein the data acquisition system comprises a microphone and a speech recognition module and/or wherein the data restitution system comprises a speaker and a speech generation module.

**15.** A computer readable storage medium comprising computer readable program code embodied therein for causing a processing unit to perform a method for providing to a user a solution element from a predetermined list of solution elements, by:

storing, in a non-volatile memory, a first table with solution elements, question elements, and for each pair of solution element and question element, a determining parameter indexing a level of concordance between said question element and said solution element;
generating, by a processing unit, a second table by extracting from the first table solution elements, question elements and the determining parameters of each pair of solution element and question element;
successively providing to the user a plurality of question elements from the second table;
acquiring, from the user, an information element in response to a question element provided to the user;
identifying one or a plurality of improbable solution element(s) from the second table by comparing the information element and the determining parameter of each pair made of the question element and any remaining solution elements of the second table;
modifying the second table by removing the improbable solution element(s), and
providing, to the user, any remaining solution elements from the second table when no question element that enables to identify an improbable solution element from the second table remains in the second table.

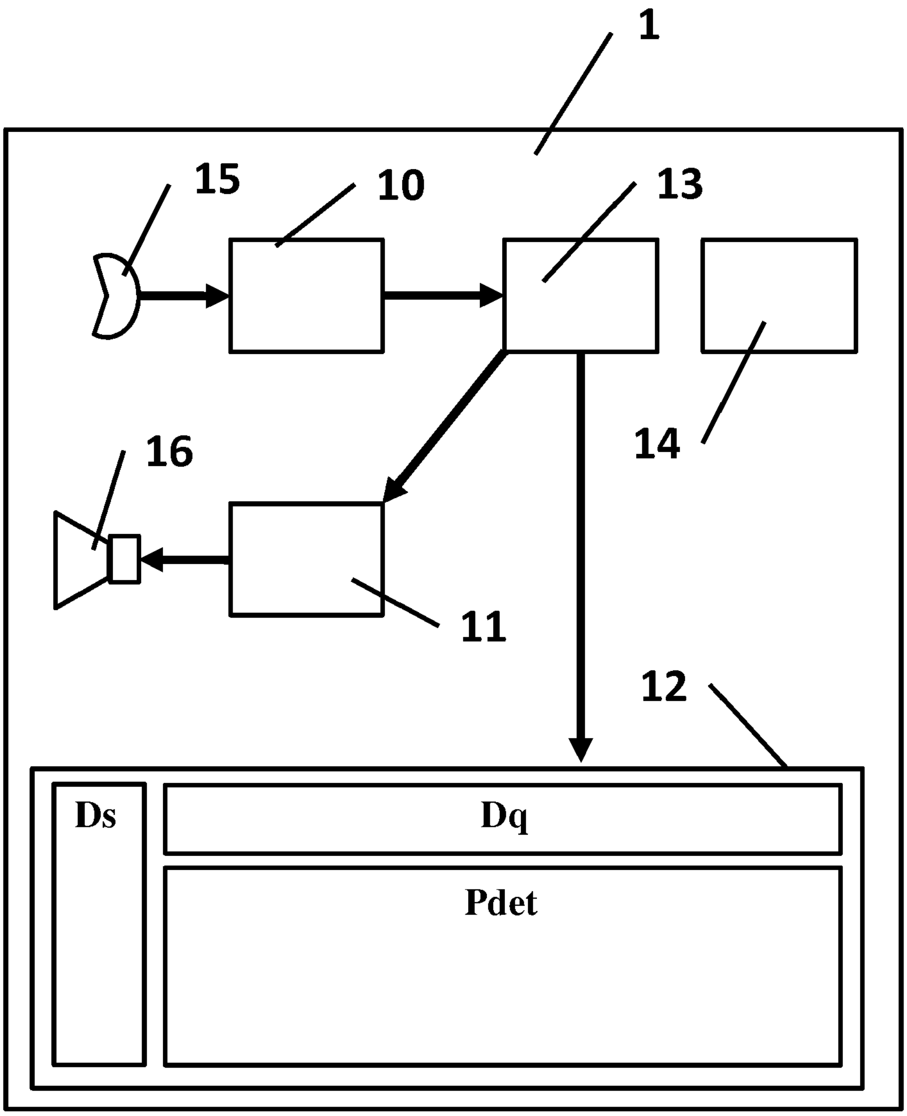


FIG. 1

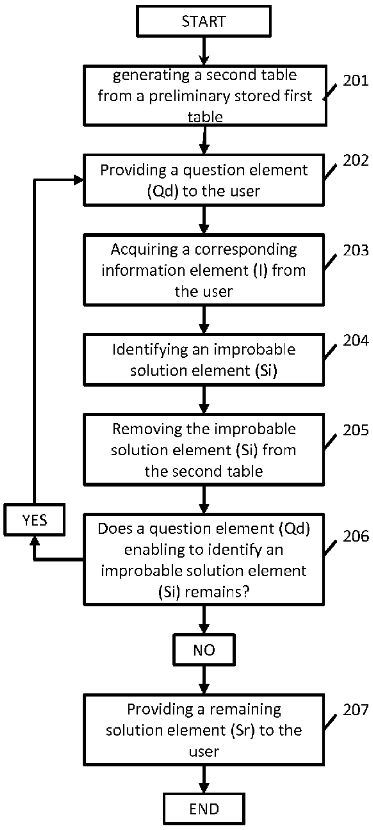

FIG. 2A

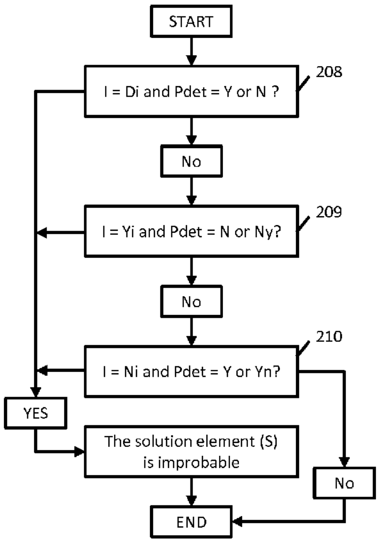

FIG. 2B

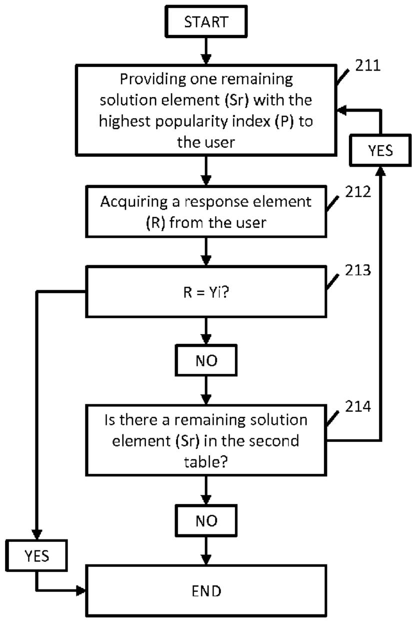

FIG. 2C

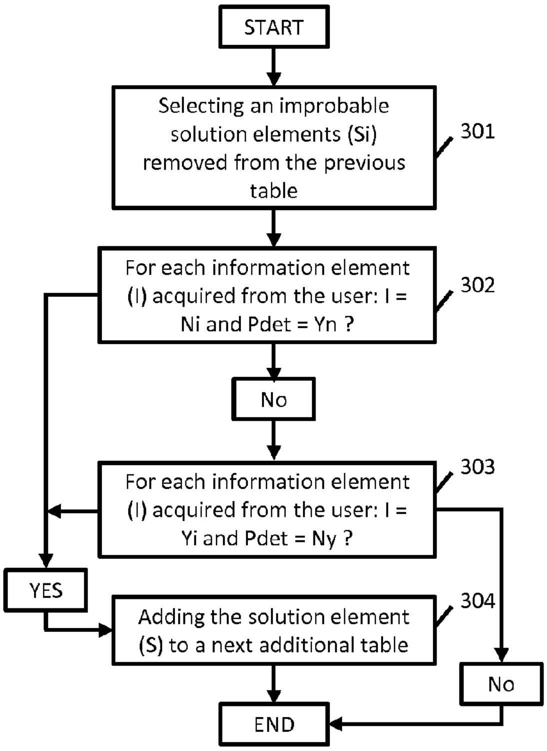
START
Selecting an improbable solution elements (Si) removed from the previous table
301
For each information element (I) acquired from the user: I = Ni and Pdet = Yn ?
302
No
For each information element (I) acquired from the user: I = Yi and Pdet = Ny ?
303
YES
Adding the solution element (S) to a next additional table
304
No
END

FIG. 3

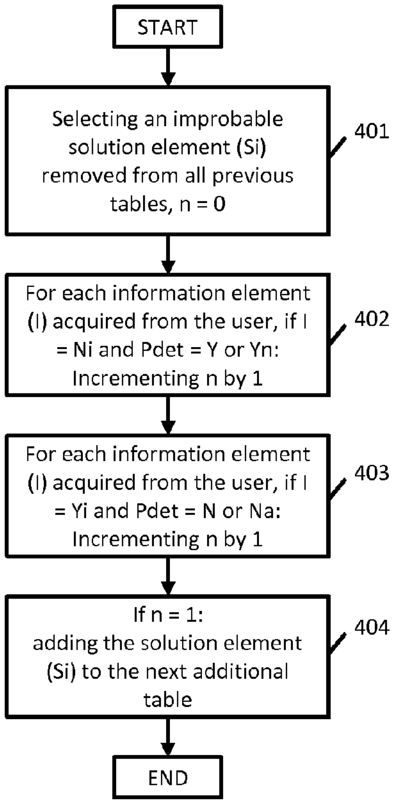
START
Selecting an improbable solution element (Si) removed from all previous tables, n = 0
401
For each information element (I) acquired from the user, if I = Ni and Pdet = Y or Yn: Incrementing n by 1
402
For each information element (I) acquired from the user, if I = Yi and Pdet = N or Na: Incrementing n by 1
403
If n = 1: adding the solution element (Si) to the next additional table
404
END

FIG. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20060230008 A